# EUROPEAN PATENT APPLICATION

(11) **EP 4 523 838 A1**
(43) Date of publication of application: **19.03.2025**
(21) Application number: 23197995.6
(22) Date of filing: 18.09.2023
(51) Int. Cl.: B23K 26/38, B23K 37/047

(54) **A TUBE UNLOADING SYSTEM FOR A TUBE WORKING MACHINE, A LASER TUBE WORKING MACHINE COMPRISING SAID UNLOADING SYSTEM, AND A METHOD FOR UNLOADING A TUBE FROM A LASER TUBE WORKING MACHINE**

(71) Applicant: Bystronic Laser AG, 3362 Niederönz (CH)
(72) Inventor: Fontana, Luca, Ospitaletto BS (IT); Taroni, Davide, Carate Urio CO (IT); Dalola, Stefano, Cazzago San Martino BS (IT)
(74) Representative: Perani & Partners S.p.A.

(57) **Abstract**

Tube unloading system (1) for a tube working machine (100) configured to receive a tube (T) from a working station (101) of the tube working machine (100) and to unload it. The tube unloading system (1) comprises:
- a base structure (2) extending along a longitudinal direction (X-X) between a first end portion (21) and a second end portion (22),
- one or more carriages (3a, 3b) slidably mounted on the base structure (2) along the longitudinal direction (X-X) between the first end portion (21) and the second end portion (22), each carriage (3a, 3b) comprises: one or more supporting elements (5) configured to receive the tube (T) from the working station (101) and support the tube (T), and unloading means (4) configured to receive the tube (T) from the supporting elements (5) and carry the tube (T) along an unloading direction (Y-Y).

Wherein
- the unloading means (4) comprise one or more conveyors (40) having a carrying surface (40a) extending along the unloading direction (Y-Y),
- the supporting element (5) is configured to move along a height direction (Z-Z), transversal to the carrying surface (40a), between a working position, wherein the supporting element (5) is arranged above the carrying surface (40a) along the height direction (Z-Z) to support the tube (T), and a rest position wherein the supporting element (5) is arranged below the carrying surface (40a) along the height direction (Z-Z) to lay down the tube (T) on the carrying surface (40a).

## Description

### Technical field

The present invention pertains to the field of equipment and components for unloading a tube from a tube working machine.

In detail, the present invention relates to a tube unloading system configured to receive a tube from a working station of a tube working machine and to unload it.

The present invention also relates to a laser cutting machine comprising such tube unloading system.

Furthermore, the present invention relates to a method for unloading a tube from a laser tube working machine.

### State of the art

Laser cutting is a well-known technology that uses a laser beam to melt and/or vaporize materials, resulting in a cut edge or an engraving.

This laser cutting technology has been combined with computer numerical control in CNC machines to automate the cutting operations of workpieces such as metal sheets or tubes.

The laser tube working machines comprise a working station where a laser is adapted to perform cutting operations on a tube to be worked and, downstream of the working station, an unloading system configured to receive the worked tube and to unload it from the tube working machine.

EP2492041A1 discloses an unloading system comprising a depositing carriage movable relative to the working station in the longitudinal direction of the tube and having a depositing surface configured to receive the tube from the working station and, upon tilting, to discharge the tube into a discharging area.

In use, when the depositing surface tilts to unload the tube, the tube begins to roll or slide on the depositing surface until it falls into the discharging area. The disadvantage of this is that the uncontrolled rolling/sliding of the tube on the depositing surface and its fall, in addition to being extremely noisy, can damage the worked tube.

### Scope of the invention

In this context, one object of the present invention is to provide an improved tube unloading system for a tube working machine and preferably an acoustically comfortable tube unloading system for a tube working machine capable of preserving the integrity of the worked tube and ensuring safe unloading operations.

It is also object of the present invention is to provide an improved and preferably a safe to use and acoustically comfortable laser tube working machine capable of minimizing the production scraps.

A further object of the present invention is to provide an improved and preferably a safe and acoustically comfortable method for unloading a tube from a laser tube working machine capable of preserving the integrity of the worked tube.

### Summary of the invention

The tube unloading system object of the present invention is configured to receive a tube from a working station of a tube working machine and to unload it safely and quietly.

In detail, the tube unloading system comprises a base structure extending along a longitudinal direction between a first and a second end portions, and one or more carriages slidably mounted on the base structure along the longitudinal direction between such first and second end portions.

Each carriage comprises one or more supporting elements configured to receive the tube from the working station and unloading means configured to receive the tube from the supporting element(s) and convey the tube along an unloading direction.

The unloading means comprise one or more conveyors having a carrying surface extending along the unloading direction, the supporting elements are configured to move along a height direction transversal to the carrying surface between a working position and a rest position.

In the working position the supporting element is positioned above the carrying surface along the height direction to support the tube, while in the rest position the supporting element is positioned below the carrying surface along the height direction to lay down the tube on the carrying surface.

In order to unload the tube, the one or more supporting elements - moving along the height direction from the working to the rest position - lay the tube on the conveyor, than, when the tube is placed on the carrying surface, the unloading means are activated to transport the tube along the unloading direction.

Advantageously, therefore, the unloading means and the one or more supporting elements cooperate synergically to unload the tube, thereby preventing noisy falls and violent impacts that may damage the tube and/or endanger the safety of the operator.

According to one embodiment, the carrying surface of the conveyors extends perpendicular to the height direction. This arrangement provides better control of the unloading operation, in particular it prevents the pipe from rolling on the support surface of the conveyor at high speed.

According to one embodiment, each carriage comprises a first and a second supporting element. The first supporting element has supporting seat adapted to support and contain along the unloading direction tubes with a first cross section. The second supporting element is configured to support tube with a second cross section different from, and in particular bigger than, the first cross section. Advantageously, the first and second supporting elements allow tubes of any size to be properly unloaded. In detail, the first supporting elements makes it possible to support and laterally contain small-medium sized tubes which, due to their low moment of inertia, are prone to bending; on the contrary, the second supporting elements allows to support big sized tubes which do not fit into the seat of the first supporting element.

According to one embodiment, the first and second supporting elements comprise a glass-hours shaped saddle defining the seat and a cylindrical roller, respectively.

According to one embodiment, each carriage comprises a first portion slidably mounted on the base structure along the longitudinal direction, a second portion - comprising the unloading means and the one or more supporting elements - movably mounted on the first portion along the height direction, and height driving means configured to mutually move the first and second portions. Advantageously, the mutual movement of the first and second portions in the height direction allows the supporting elements (in the working configuration) to actively support the tube during machining.

According to one embodiment, the one or more conveyors each comprise a closed loop belt defining the carrying plane, a belt drive configured to drive the closed loop belt to carry the tube along the unloading direction, and a plurality of transport elements arranged in succession on the closed loop belt and configured to drag the tube along the unloading direction when the belt drive is activated. The conveyors allow precise control of the transport of the tubes along the unloading direction, avoiding dangerous and noisy rolling of tubes at high speeds.

According to one embodiment, at least one carriage comprises a first and a second conveyor spaced apart along the longitudinal direction and one or more supporting elements arranged between such first and second conveyors. This arrangement allows the tube to be stably supported when laid down on the carrying surface by the supporting elements.

According to one embodiment, the tube unloading system comprises a plurality of carriages slidably mounted on the base structure in succession along the longitudinal direction between the first and second end portions of the base structure. Advantageously, the plurality of carriages allows the tube to be unloaded in a stable manner by providing multiple points of support along its axis.

According to one embodiment, each carriage comprises sliding drive means configured to drive the respective carriage along the longitudinal direction with respect to the first and second end portions of the base structure. The sliding drive means allow the relative positions of the carriages to be adjusted to match the tube length. Therefore, advantageously, the sliding drive means allows tube of different lengths to be properly unloaded.

According to an embodiment, the tube unloading system comprises a moving mandrel equipped with gripping means and slidably mounted on the base structure along the longitudinal direction between the one or more carriages and the second end portion. The mandrel laterally contains and drags the tube along the longitudinal direction, thus allowing better control of the tube position.

The present invention further relates to a laser tube working machine comprising a working station equipped with a laser source configured to work a tube, and the above-mentioned tube unloading system arranged downstream of the working station along a tube feeding direction. Since the performance of a machine is given by the performance of all its components, the above-mentioned unloading system - which is acoustically comfortable, safe to use, and capable of preserving the integrity of the worked tube - allows to provide a safer laser tube working machine with low operational noise and reduced scrap production.

According to one embodiment, the unloading system is arranged with the longitudinal direction extending along the tube feeding direction.

The present invention also relates to a method for unloading a tube from a laser tube working machine, comprising the steps of: feeding a tube worked by a working station to a tube unloading system having one or more carriages slidably mounted on a base structure along a longitudinal direction; arranging the carriage(s) at a predetermined position along the longitudinal direction; arranging one or more supporting elements of the carriages in a working position to support the tube; moving the supporting elements along a height direction to switch from the working position to a rest position to lay down the tube on a carrying surface of carriages unloading means; and activating the unloading means to carry the tube along an unloading direction.

Advantageously, the method according to the present invention allows to unload a tube preventing nosy falls and violent impacts that could damage the tube and/or endanger the safety of the operator. In fact, the tube is sequentially gently laid down on the carrying surface by the supporting elements and then transported in the unloading direction by the unloading means.

According to one aspect, during the step of feeding the tube from the working station to the tube unloading system along the feeding direction and before of moving the supporting element along the height direction to lay down the tube on the carrying surface, the one or more carriages are moved along the longitudinal direction from the predetermined position away from the working station. This allows the position of the carriages to be dynamically adjusted to the worked length of the tube, ensuring reliable support at all tube working steps.

### BRIEF DESCRIPTION OF THE DRAWINGS

Further characteristics and advantages of the present invention will appear more clearly from the indicative, and therefore non-limiting, description of a preferred but not exclusive embodiment of the tube unloading system and laser tube working machine as illustrated in the enclosed drawings in which:
- Figure 1 shows a schematic top view of a laser tube working machine according to the present invention,
- Figure 2 shows a perspective view of a tube unloading system according to the present invention,

- Figure 3 shows a perspective view of a first component of the tube unloading system of Figure 2,
- Figure 4a shows a perspective view of the first component of Figure 3 in a big tubes supporting configuration,
- Figure 4b shows a perspective view of the first component of Figure 3 in a small-medium tubes supporting configuration,
- Figure 5 shows a perspective view of a second component of the tube unloading system of Figure 2,
- Figure 6a shows a perspective view of the second component of Figure 5 in the big tubes supporting configuration,
- Figure 6b shows a perspective view of the second component of Figure 5 in the small-medium tubes supporting configuration,
- Figure 7 shows a front view of the tube unloading system of Figure 2.

### DETAILED DESCRIPTION

The present invention relates to a tube unloading system 1 for tube working machine 100, in particular a laser working machine such as a laser tube cutting machine.

In the context of the present invention, the term "tube" is used to indicate an elongated structure extending along a tube axis A-A between opposite ends. It is worth specifying that the term "tube" is not limited to pipes - i.e. rounded tube - but it also refers to any elongated structure with, for example, rectangular, squared or oval hollow cross section as well as to profiles with open cross-sections such as C-, U-, V-, X-, T-, H- or cross-shaped profiles.

The tube unloading system 1 according to the present invention is configured to receive a tube T, in particular a worked tube, from a working station 101 of the tube working machine 100 and to unload it.

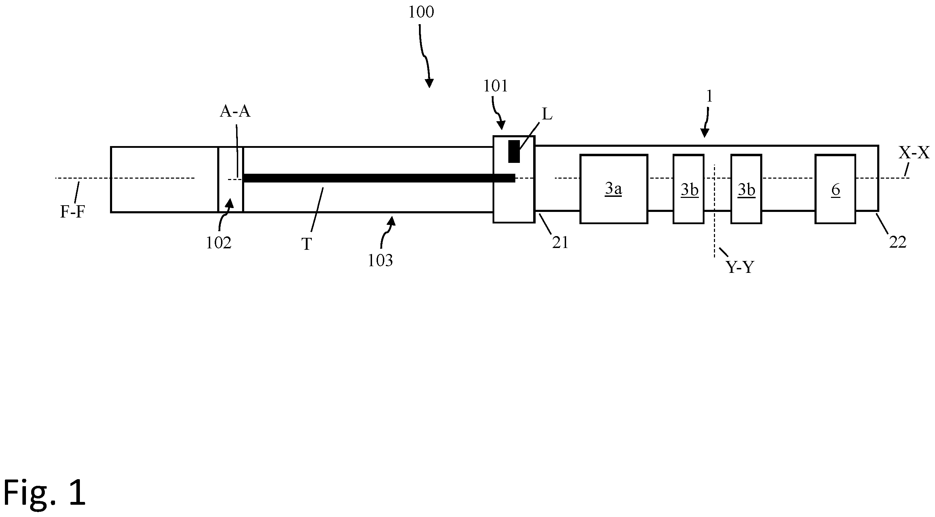

In detail, with reference to figure 1, the tube T is fed from the working station 101 to the tube unloading system 1 along a feeding direction F-F and the tube unloading system 1 is configured to unload the received tube T from the tube working machine 100 by transporting it along an unloading direction Y-Y.

Preferably, the unloading direction Y-Y is transverse, in particular perpendicular, to the feeding direction F-F.

Preferably, the unloading direction Y-Y is transverse, in particular perpendicular, to the tube axis A-A.

Furthermore, the feeding direction F-F is preferably directed along the tube axis A-A. In other words, the tube T is fed from the working station 101 to the tube unloading system 1 with its axis A-A aligned with the feeding direction F-F.

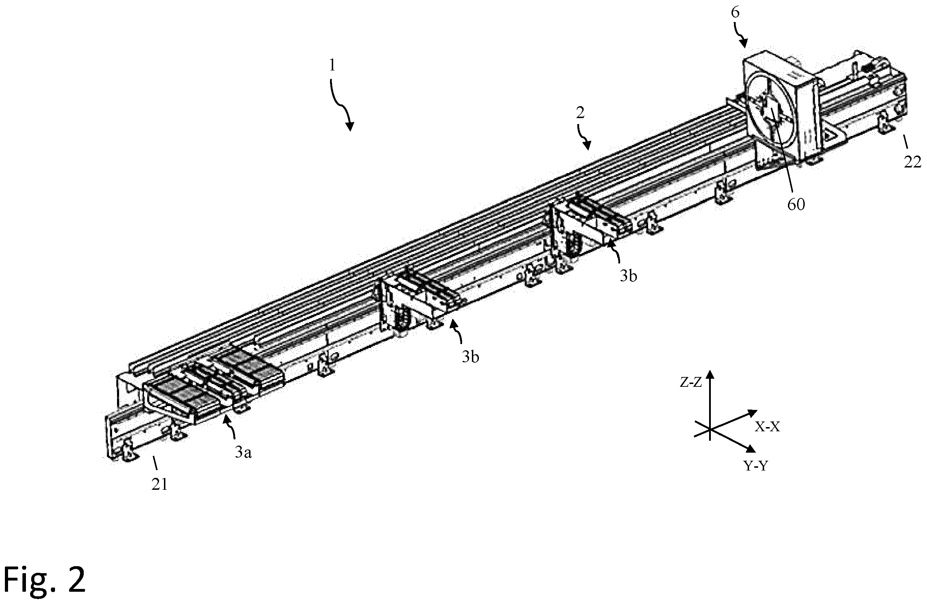

Referring to figure 2, the tube unloading system 1 comprises a base structure 2, configured to rest on a floor surface, extending along a longitudinal direction X-X between a first and a second end portions 21, 22.

Preferably, the longitudinal direction X-X is parallel to the feeding direction F-F. Therefore, in use, the tube T is fed from the working station 101 to the tube unloading systems 1 along the longitudinal direction X-X.

According to one aspect shown in figure 1, the first end portion 21 of the base structure 2 is associated with, in particular arranged close to, the working station 101 and the second end portion 22 is opposite to the first one 21. Therefore, in use, the tube T is fed to the tube unloading system 1 from the first end portion 21 to the second end portion 22 along the longitudinal direction X-X.

The tube unloading system 1 also comprises one or more carriages 3a, 3b slidably mounted on the base structure 2 along the longitudinal direction X-X between the first and the second end portions 21, 22 for moving along the longitudinal direction X-X between the first and second end portions 21, 22.

Preferably, the tube unloading system 1 comprises a plurality of carriages 3a, 3b slidably mounted on the base structure 2 in succession along the longitudinal direction X-X between the first and second end portions 21, 22.

Moving along the longitudinal direction X-X, the one or more carriages 3a, 3b adjust their mutual position with respect to the first and second end portions 21, 22 and thus with respect to the working station 101.

Moreover, in the embodiment of Figure 2 - in which the tube unloading system 1 comprises two or more carriages 3a, 3b -, moving along the longitudinal direction X-X, the two or more carriages 3a, 3b can also adjust their mutual position along the longitudinal direction.

The position of each carriage 3a, 3b along the longitudinal direction can be adjusted either electronically, in particular by means of a control unit (not shown) of the tube unloading system or of the tube working machine 100, or manually, such as by means of manual kinematic means (not shown).

In the embodiment in which the position of the carriages 3a, 3b is adjusted electronically, each carriage 3a, 3b comprises a sliding drive means 33 configured to drive the respective carriage 3a, 3b along the longitudinal direction X-X with respect to the first and second end portions 21, 22 of the base structure 2. The sliding drive means 33 comprises, for example, an electric drive (not shown) in signal communication with the control unit.

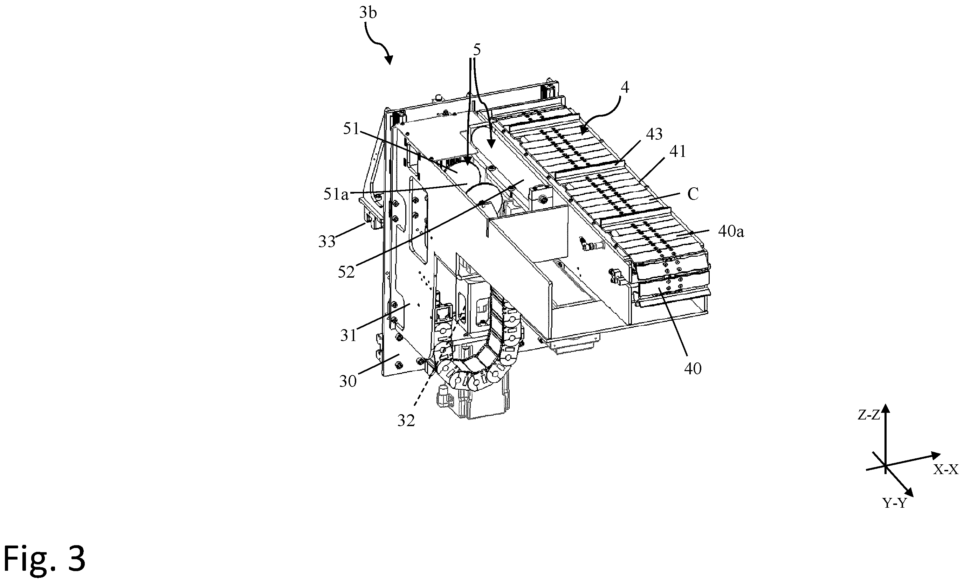

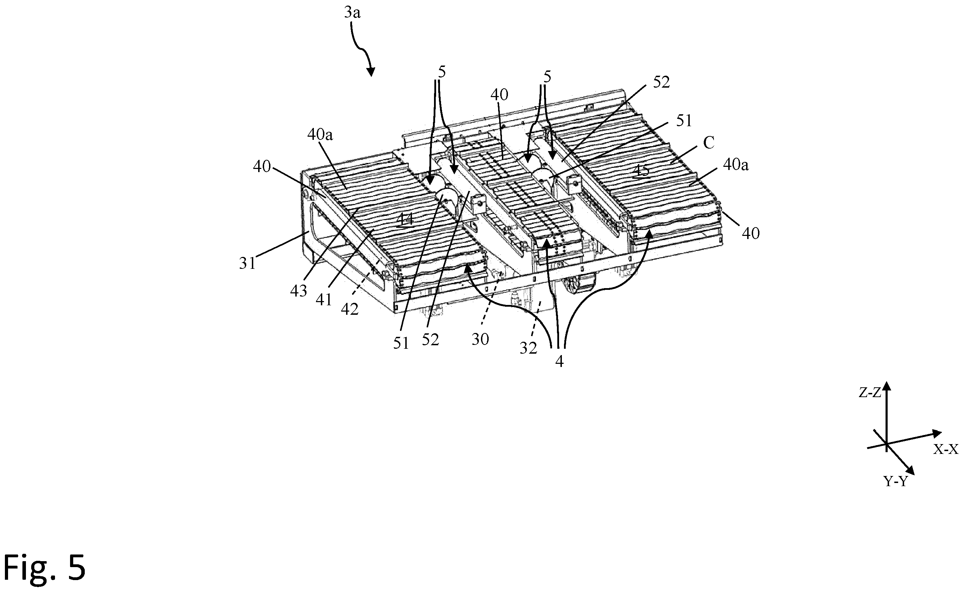

Figures 3 and 5 show a first embodiment 3a and a second embodiment 3b of the carriage, respectively. The tube unloading system 1 may comprise either only one carriage of the first or second embodiment and two or more carriages of the first and/or second embodiment. For example, the tube unloading system 1 shown in figure 2 comprises one carriage 3a of the first embodiment and two carriages of the second embodiment 3b.

Referring to the two embodiments shown in Figure 3 and 5, each carriage 3a, 3b comprises one or more supporting elements 5 and unloading means 4.

Such supporting element(s) 5 and unloading means 4 cooperate synergically to unload the tube T received from the working station 101 from the tube working machine 100. In detail, the supporting element(s) 5 is(are) configured to receive the tube T from the working station 101 and to support it against gravity, the unloading means 4 are configured to receive the tube T from the supporting element(s) 5 and to carry the tube T along the unloading direction Y-Y.

Always referring to figures 3 and 5, the unloading means 4 comprise one or more conveyors 40 for conveying the tube in the unloading direction Y-Y.

More particularly, the one or more conveyors 40 define a carrying surface 40a extending along the unloading direction Y-Y and the longitudinal direction X-X. Preferably, the carrying surface 40a extends mainly along the unloading direction Y-Y.

In the first embodiment of figure 3, the carriage 3b comprise only one conveyor 40.

In the second embodiment of figure 5, the carriage 3a comprises two or more, in particular three, conveyors 40. In this embodiment, each conveyor 40 define a respective portion of the carrying surface 40a.

According to one aspect, each conveyor comprises a closed loop belt 41 defining the carrying surface 40a, a belt drive 42 configured to drive the closed loop belt 41 to convey the tube T along the unloading direction Y-Y, and a plurality of transport elements 43 (e.g. plates or pins) arranged in succession on the closed loop belt 41. In use, when the closed loop belt 41 is driven by the belt drive 42, the transport elements 43 are configured to engage the tube T and drag it along the unloading direction Y-Y.

Each supporting element 5 is configured to move along a height direction Z-Z which is transverse to the carrying surface 40a.

Preferably, the height direction Z-Z corresponds to the direction of gravity. Therefore, the carrying surface 40a is preferably transverse to the direction of gravity.

In a preferred embodiment, the carrying surface 40a is perpendicular to the height direction Z-Z, in particular to the direction of gravity (i.e. the direction of gravity is normal to the carrying surface 40a). In this respect, it should be specified that in the context of the present description, a tolerance of ± 10° is accepted; the term "perpendicular" should therefore be understood as 90° ± 10°.

As shown in the reference system of figure 2, the height direction Z-Z is preferably perpendicular to both the longitudinal and unloading directions X-X, Y-Y. More preferably, the longitudinal, unloading and height directions X-X, Y-Y, Z-Z realize a tri-orthogonal Cartesian tern.

Moving along the height direction Z-Z, the supporting element 5 switches between a working position in which it is in contact with the tube T in order to support the tube T against gravity, and a rest position in which it is not in contact with the tube T.

More specifically, in the working position, the supporting element 5 is arranged above the carrying surface 40a along the height direction Z-Z in order to support the tube T during and/or after the working step (i.e. when working station works the tube). On the contrary, in the working position, the supporting element 5 is arranged below the carrying surface along the height direction in order to lay down the tube T on the carrying surface 40a.

Therefore, switching from the working to the rest position, the supporting elements 5 lay down the tube T on the carrying surface 40a defined by the one or more conveyors 40 that, upon receiving the tube T, conveys the tube T along the unloading direction Y-Y.

According to one aspect shown in figures 3, 4a, 4b, 5, 6a, 6b, each carriage 3a, 3b comprises first supporting elements 51 configured to support tubes T with a first cross section, and a second supporting element 52 configured to support tubes T with a second cross section, different from the first cross section.

The first and second cross sections have different sizes, in particular the first cross section is associated with small-medium sized tubes while the second cross section is associated with big sized tubes.

Therefore, in the context of the present invention, the term "size" refers to the size of the cross-section of the tube that is defined by a characteristic dimension. For round tubes (pipes) the characteristic dimension is the diameter of the tube, while for other types of tubes (e.g. rectangular, square, C-, U-, V-, X-, T, H- or cross-shaped profiles.) the characteristic dimension is the diameter of the circumference that inscribe the cross-section of the tube.

Tubes are classified as small, medium, large (big) according to the characteristic dimension. By way of example, a characteristic dimension of small tubes may be between 9 mm and 30 mm of medium tubes is between 31 mm and 130 mm, and of large tubes is between 130 mm and 324 mm.

Small and medium tubes have sections with a low moment of inertia and are therefore known to be prone to bending. For this reason, in order to be properly unloaded from the tube working machine, they must be laterally restrained, i.e. restrained in a lateral direction transverse to, and in particular perpendicular to, the tube axis A-A of the tube T and the direction of gravity.

Large (big) tubes, unlike small and medium tubes, have sections with high moments of inertia that give them high bending stiffness. For this reason, large tubes can be properly unloaded without the need for lateral containment.

In order to laterally constrain small-medium tubes, the first supporting element 51 comprises a supporting seat 51a adapt to receive tubes having the first cross section. Specifically, the seat 51a is configured to support against gravity and (laterally) constrain along the unloading direction Y-Y the tubes with the first cross section.

In the embodiments of figures 3 and 5, the first supporting element 51 comprises a glass-hours shaped saddle which defines the seat 51a.

Furthermore, in the embodiments of figure 3 and 5, the second supporting element 52 comprises a cylindrical roller

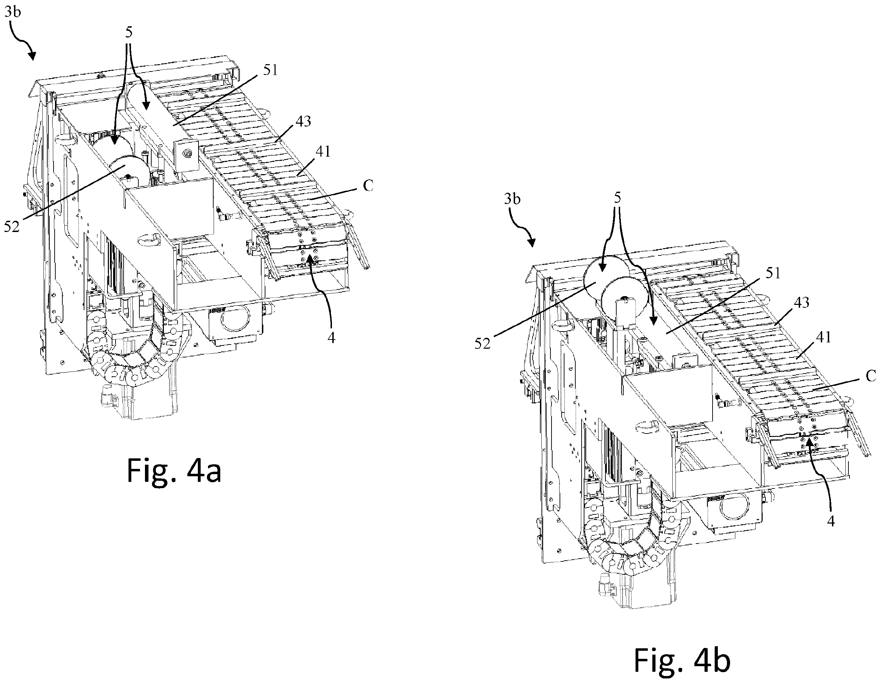

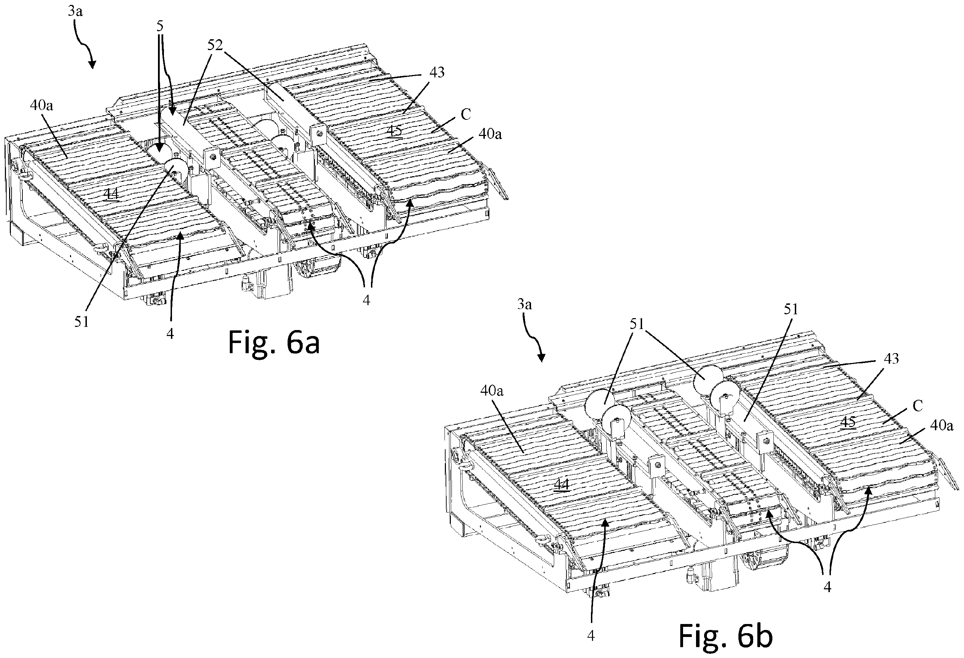

Referring to figures 4a, 4b, 6a, 6b, the first and second supporting elements 51, 52 are individually movable along the height direction Z-Z.

When the tube T fed by the working station 101 has the first cross section (i.e., small-medium tube) the first supporting element(s) 51 is(are) raised in the working position to engage the tube T while the second supporting element(s) 52 is(are) kept in the resting position (small-medium tubes supporting configuration). On the contrary, when the tube T fed by the working station 101 has the second cross section (big tube) the first supporting element(s) 51 is(are) kept in the resting position while the second supporting element(s) 52 is(are) raised in the working position to engage the tube T (big tubes supporting configuration).

The small-medium tubes supporting configuration is shown in figures 4b and 6b, while the big tubes supporting configurations is shown in figures 4a and 6a.

In the second embodiment shown in figures 5, 6a and 6b, the carriages 3a comprises at least a first and a second conveyors 44, 45 spaced apart along the longitudinal direction X-X and the one or more supporting elements 5 (i.e. the first supporting elements 51 and the second supporting elements 52) are arranged between the first and second conveyors 44, 45.

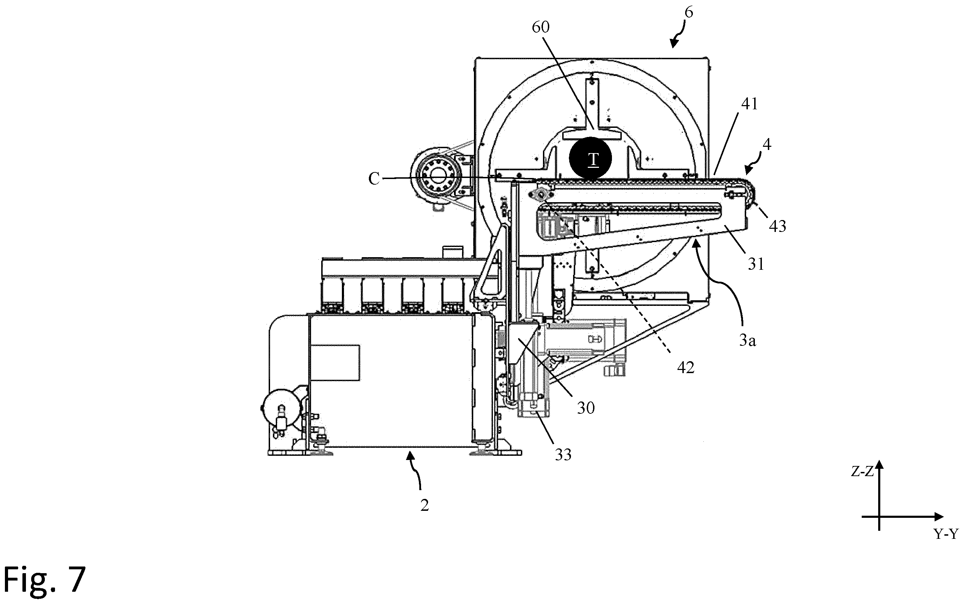

According to one aspect shown in figure 7, each carriage 3a, 3b comprises a first portion 30 slidably mounted on the base structure 2 along the longitudinal direction X-X, a second portion 31 - which comprises the unloading means 4 and the one or more supporting elements 5 - movably mounted on the first portion 30 along the height direction Z-Z, and height driving means 32.

The height driving means 32 are configured to move the second portion 31 with respect to the first portion 30 to allow the supporting element 5 to support the tube T when the supporting element 5 is in the working position.

The first and second potions 30, 31 and the height driving means 32 make it possible to maintain the longitudinal axis A-A of the worked tube T with non-circular cross-section at a constant supporting height when rotated around its axis A-A by the tube working machine 100 (active support).

Moreover, the first and second potions 30, 31 and the height driving means 32 allow the carriages 3a, 3b to be as close as possible to the tube at the end of the working phase, thus avoiding droppings that could damage the tube T and also making the unloading system safer and less noisy.

Preferably, the height driving means 32 comprises, for example, an electric drive (not shown) in signal communication with the control unit.

It should be specified that, in the embodiment of multiple carriages, the second potions 31 of different carriages 3a, 3b can move together or independently along the height direction Z-Z.

Referring to the embodiment of figure 2, the tube unloading system 1 can also comprise a moving mandrel 6 slidably mounted on the base structure 2 along the longitudinal direction X-X between the one or more carriages 3a, 3b and the second end portion 22. The mandrel 6 comprises gripping means 60 adapted to grip an end of the tube T.

During the working phase, the mandrel 6 is used to laterally contain tubes T that need to be laterally contained (i.e. small-medium tubes) and to drag the tube T along the longitudinal direction X-X in order to better control its position.

I should be specified that the carriages 3a, 3b and the mandrel 6 are slidably mounted on the base structure by of known sliding means (e.g. rails) that, therefore, will not further described.

The present invention also relates to a laser tube working machine 100, such as a laser tube cutting machine.

Referring to figure 1, the laser tube working machine 100 comprises: a working station 101 having a laser source L configured to work (e.g. cut or engrave) a tube T, a tube-carrying element 102 configured to feed the tube T to the laser working station 101 along a feeding direction F-F while supported by a tube-supporting system 103, and the above described tube unloading system 1.

The tube-supporting system 103 and the tube-carrying element 102 are arranged upstream of the working station 101 along the tube feed direction F-F.

The tube unloading system 1 is arranged downstream of the working station 101 along the feeding direction F-F.

Preferably, the tube unloading system 1 is arranged in the laser tube working machine with the longitudinal direction X-X of the base structure 2 extending along the tube feeding direction F-F.

The present invention also relates to a method for unloading a tube T from a laser tube working machine 100.

Such method is preferably, but not necessarily, carried out by the tube unloading system 1 described above.

The method according to the present invention comprises the step of feeding a tube T worked by a working station 101 of a tube working machine 100 to a tube unloading system 1 comprising one or more carriages 3a, 3b slidably mounted on a base structure 2 along a longitudinal direction X-X. Preferably, the tube unloading system 1 is the one described above.

The method also comprises the steps of arranging the one or more carriages 3a, 3b of the unloading system 1 at a predetermined position along the longitudinal direction X-X and bringing the one or more supporting elements 5 of the carriages 3a, 3b in the working position to support the tube T during and/or after a working operation.

In the case that the supporting elements 5 of the carriages 3a, 3b supports the tube T during the working operations, the method may comprise the step of moving the carriage along the height direction Z-Z (e.g. activating the above-described height driving means) to actively support the worked portion of tube T.

For unloading the tube T, the method comprises the steps of moving the supporting elements 5 of the carriages 3a, 3b along a height direction Z-Z to switch from the working position to a rest position wherein the tube T is laid down on a carrying surface 40a of unloading means 4 of the carriages 1, and activating the unloading means 4 to carry the tube T along the unloading direction Y-Y.

Preferably, during the feeding step and before the switching of the supporting element to the rest position, the method comprises the step of moving the one or more carriages 3a, 3b along the longitudinal direction X-X from the predetermined position away from the working station. This allows the carriages 3a, 3b positions to be dynamically adjusted to the worked length of the tube T, to ensure reliable support action.

Those skilled in the art will obviously appreciate that several changes and variants may be made to the arrangements as described hereinbefore to meet incidental and specific needs. All these variants and changes fall within the scope of the invention, as defined in the following claims.

## Claims

1. A tube unloading system (1) for a tube working machine (100), the tube unloading system (1) being configured to receive a tube (T) from a working station (101) of the tube working machine (100) and unload said tube (T), the tube unloading system (1) comprising:
- a base structure (2) extending along a longitudinal direction (X-X) between a first end portion (21) and a second end portion (22),
- one or more carriages (3a, 3b) slidably mounted on the base structure (2) along the longitudinal direction (X-X) between the first end portion (21) and the second end portion (22), each carriage (3a, 3b) comprising:
- one or more supporting elements (5) configured to receive the tube (T) from the working station (101) and support the tube (T),
- unloading means (4) configured to receive the tube (T) from the one or more supporting elements (5) and carry the tube (T) along an unloading direction (Y-Y) transversal to the longitudinal direction (X-X),
**characterized in that:**
- the unloading means (4) comprise one or more conveyors (40) having a carrying surface (40a) extending along the unloading direction (Y-Y),
- the supporting element (5) being configured to move along a height direction (Z-Z), transversal to the carrying surface (40a), between a working position, wherein the supporting element (5) is arranged above the carrying surface (40a) along the height direction (Z-Z) to support the tube (T), and a rest position wherein the supporting element (5) is arranged below the carrying surface (40a) along the height direction (Z-Z) to lay down the tube (T) on the carrying surface (40a).

2. The tube unloading system (1) according to claim 1, wherein the carrying surface (40a) extends perpendicular to the height direction (Z-Z).

3. The tube unloading system (1) according to any of the preceding claims, wherein each carriage (3a, 3b) comprises:
- a first supporting element (51) having a supporting seat (51a) adapt to receive the tube (T), the seat (51a) being configured to support and contain along the unloading direction (Y-Y) tubes (T) with a first cross section,
- a second supporting element (52) configured to support tubes (T) with a second cross section different from the first cross section.

4. The tube unloading system (1) according to claim 3, wherein:
- the first supporting element (51) comprises a glass-hours shaped saddle defining the seat (51a),
- the second supporting element (52) comprises a cylindrical roller.

5. The tube unloading system (1) according to any of the preceding claims, wherein each carriage (3a, 3b) comprises:
- a first portion (30) slidably mounted on the base structure (2) along the longitudinal direction (X-X),
- a second portion (31), comprising the unloading means (4) and the one or more supporting elements (5), movably mounted on the first portion (30) along the height direction (Z-Z),
- height driving means (32) configured to move the second portion (32) with respect to the first portion (31) to allow the supporting elements (5) to support the tube (T) when the supporting elements (5) are in the working position.

6. The tube unloading system (1) according to any of the preceding claims, wherein the one or more conveyors (40) comprises:
- a closed loop belt (41) defining the carrying surface (40a),
- a belt drive (42) configured to drive the closed loop belt (41) to carry the tube (T) along the unloading direction (Y-Y),
- a plurality of transport elements (43) arranged in succession on the closed loop belt (41), said transport elements (43) being configured to engage the tube (T) and drag the tube (T) along the unloading direction (Y-Y) when the closed loop belt (41) is driven by the belt drive (42).

7. The tube unloading system (1) according to any of the preceding claims, wherein:
- at least one of the carriages (3a) comprises a first conveyor (44) and a second conveyor (45) spaced apart along the longitudinal direction (X-X),
- one or more of the supporting elements (5) are arranged between the first conveyor (44) and the second conveyor (45) along the longitudinal direction (X-X).

8. The tube unloading system (1) according to any of the preceding claims, comprising a plurality of carriages (3a, 3b) slidably mounted on the base structure (2) in succession along the longitudinal direction (X-X) between the first end portion (21) and the second end portion (22).

9. The tube unloading system (1) according to claim 8, wherein each carriage (3a, 3b) comprises sliding drive means (33) configured to drive the respective carriage (3a, 3b) along the longitudinal direction (X-X) with respect to the first end portion (21) and the second end portion (22).

10. The tube unloading system (1) according to any of the preceding claims, comprising a moving mandrel (6) slidably mounted on the base structure (2) along the longitudinal direction (X-X) between the one or more carriages (3a, 3b) and the second end portion (22) of the base structure (2), the mandrel (6) comprising gripping means (60) configured to grip the tube (T).

11. A laser tube working machine (100) comprising:
- a working station (101) comprising a laser source (L) configured to work a tube (T),
- a tube unloading system (1) according to any of the preceding claims arranged downstream the working station (101) along a tube feeding direction (F-F).

12. The laser tube working machine (100) according to claim 11, wherein the tube unloading system (1) is arranged with longitudinal direction (X-X) extending along the tube feeding direction (F-F).

13. A method for unloading a tube from a laser tube working machine (100), said method comprising the steps of:
- feeding a tube (T) worked by a working station (101) to a tube unloading system (1) along a feeding direction (F-F), the tube unloading system (1) comprising one or more carriages (3a, 3b) slidably mounted on a base structure (2) along a longitudinal direction (X-X)
- arranging the one or more carriages (3a, 3b) of the unloading system (1) at a predetermined position along the longitudinal direction (X-X),
- arranging one or more supporting elements (5) of the carriages (3a, 3b) in a working position to support the tube (T) during and/or after a working operation,
- moving the supporting elements (5) of the carriages (3a, 3b) along a height direction (Z-Z) to switch from the working position to a rest position wherein the tube (T) is laid down on a carrying surface (40a) of unloading means (4) of the carriages (1),
- activating the unloading means (4) to carry the tube (T) along an unloading direction (Y- Y).

14. The method according to claim 13, wherein during feeding the tube (T) from the working station (101) to the tube unloading system (1) along the feeding direction (F-F) and before of moving the supporting elements (5) along the height direction (Z-Z) to switch from the working position to the rest position, the one or more carriages (3a, 3b) are moved along the longitudinal direction (X-X) from the predetermined position away from the working station (101).
